# EUROPEAN PATENT APPLICATION

(11) **EP 3 110 220 A1**
(43) Date of publication of application: **28.12.2016**
(21) Application number: 15752074.3
(22) Date of filing: 16.02.2015
(51) Int. Cl.: H04W 72/04, H04W 16/14

(54) **MOVING BODY COMMUNICATION SYSTEM, BASE STATION, AND USER TERMINAL**

(30) Priority: 21.02.2014 JP 2014032297
(71) Applicant: Kyocera Corporation, Kyoto-shi, Kyoto 612-8501 (JP)
(72) Inventor: FUKUTA, Noriyoshi, Kyoto-shi Kyoto 612-8501 (JP)
(74) Representative: Schwabe - Sandmair - Marx
(86) International application number: PCT/JP2015/054070
(87) International publication number: WO 2015/125716

(57) **Abstract**

eNB (200) performs a mobile communication with a user terminal in a general frequency band which a mobile network operator is licensed to use. The eNB (200) transmits, to UE (100), special configuration information for configuring measurement and report of radio state of a specific frequency band that is shared by a plurality of mobile network operators or a plurality of communication systems. The UE (100) measures the radio state of the specific frequency band based on the special configuration information, and transmits a report related to a measurement result to the eNB (200).

## Description

### TECHNICAL FIELD

The present invention relates to a mobile communication system, a base station, and a user terminal in which a specific frequency band is used for mobile communication.

### BACKGROUND ART

In the 3rd Generation Partnership Project (3GPP) that is a mobile communication system standardization project, a standardization for enhancing Long Term Evolution (LTE) is being developed to accommodate rapidly increasing traffic demand (for example, see Non Patent Literature 1).

Meanwhile, a specific frequency band shared by a plurality of mobile network operators or a plurality of communication systems is coming into the spotlight. Examples of the specific frequency band include an "unlicensed band" and a "licensed shared band."

Here, the unlicensed band is a frequency band that can be used with no license. The licensed shared band is a frequency band that is allocated for a user having a certain purpose (referred to as a "primary frequency user") but can be used by a user having another purpose (referred to as a "secondary frequency user") according to a geographical condition or a technical condition.

Here, in the mobile communication system, the specific frequency band is considered to be used for mobile communication as a means for accommodating the rapidly increasing traffic demand.

### CITATION LIST

### NON PATENT LITERATURE

Non Patent Literature 1: 3GPP Technical specification "TS36.300 V12.0.0," January, 2014

### SUMMARY OF INVENTION

However, since the specific frequency band is a frequency band in which primary use of a frequency by a mobile network operator is not permitted, nor is occupancy by a certain mobile network operator allowed, there is a problem in that it is difficult to use the specific frequency band for the mobile communication.

In this regard, it is an object of the present invention to provide a mobile communication system, a base station, and a user terminal in which the specific frequency band can be used for the mobile communication.

A mobile communication system according to a first aspect includes a base station configured to perform a mobile communication with a user terminal in a general frequency band which a mobile network operator is licensed to use. The base station is configured to transmit, to the user terminal, special configuration information for configuring measurement and report of radio state of a specific frequency band that is shared by a plurality of mobile network operators or a plurality of communication systems. The user terminal is configured to measure the radio state of the specific frequency band based on the special configuration information, and transmit a report related to a measurement result to the base station.

A base station according to a second aspect is configured to perform mobile communication with a user terminal in a general frequency band which a mobile network operator is licensed to use. The base station includes a transmitter configured to transmit, to the user terminal, special configuration information for configuring measurement and report of radio state of a specific frequency band that is shared by a plurality of mobile network operators or a plurality of communication systems.

A user terminal according to a third aspect is configured to perform mobile communication with a base station in a general frequency band which a mobile network operator is licensed to use. The user terminal includes: a receiver configured to receive, from the base station, special configuration information for configuring measurement and report of a radio state of a specific frequency band that is shared by a plurality of mobile network operators or a plurality of communication systems; and a controller configured to measure the radio state of the specific frequency band based on the special configuration information and transmit a report related to a measurement result to the base station.

A mobile communication system according to a fourth aspect includes a specific base station configured to perform mobile communication with a user terminal using a TDD radio frame configuration including a plurality of sub frames in a specific frequency band that is shared by a plurality of mobile network operators or a plurality of communication systems. The plurality of subframes include a non-transmission subframe that is transmitted in neither an uplink nor a downlink. The specific base station is further configured to perform carrier sensing of measuring radio state of the specific frequency band in the non-transmission subframe.

A specific base station according to a fifth aspect is configured to perform mobile communication with a user terminal using a TDD radio frame configuration including a plurality of subframes in a specific frequency band that is shared by a plurality of mobile network operators or a plurality of communication systems. The plurality of subframes include a non-transmission subframe that is transmitted in neither an uplink nor a downlink. The specific base station includes a controller configured to perform carrier sensing of measuring radio state of the specific frequency band in the non-transmission subframe.

A user terminal according to a sixth aspect is configured to perform mobile communication with a specific base station using a TDD radio frame configuration including a plurality of subframes in a specific frequency band that is shared by a plurality of mobile network operators or a plurality of communication systems. The plurality of subframes include a non-transmission subframe that is transmitted in neither an uplink nor a downlink. The user terminal includes a controller configured to, when a notification of the TDD radio frame configuration is received from the specific base station, suspend transmission of an uplink radio signal in the non-transmission subframe based on the notified TDD radio frame configuration.

### BRIEF DESCRIPTION OF DRAWINGS

Fig. 1 is a configuration diagram illustrating an LTE system according to first and second embodiments.
Fig. 2 is a block diagram illustrating a UE according to the first and second embodiments.
Fig. 3 is a block diagram illustrating an eNB according to the first and second embodiments.
Fig. 4 is a protocol stack diagram of a radio interface according to the first and second embodiments.
Fig. 5 is a configuration diagram illustrating a radio frame according to the first and second embodiments.
Fig. 6 is a first diagram illustrating an application scenario of the LTE system according to the first embodiment.
Fig. 7 is a second diagram illustrating an application scenario of the LTE system according to the first embodiment.
Fig. 8 is a diagram for describing an RRH transmission suspension period according to the first embodiment.
Fig. 9 is a sequence diagram illustrating an operation sequence according to the first embodiment.
Fig. 10 is a diagram illustrating an application scenario of the LTE system according to the second embodiment.
Fig. 11 is a diagram illustrating an overview of a dual connectivity scheme according to the second embodiment.
Fig. 12 is a diagram for describing a non-transmission sub frame according to the second embodiment.
Fig. 13 is a sequence diagram illustrating an operation sequence according to the second embodiment.

### DESCRIPTION OF EMBODIMENTS

### [Overview of embodiments]

A mobile communication system according to a first embodiment includes a base station configured to perform a mobile communication with a user terminal in a general frequency band which a mobile network operator is licensed to use. The base station is configured to transmit, to the user terminal, special configuration information for configuring measurement and report of radio state of a specific frequency band that is shared by a plurality of mobile network operators or a plurality of communication systems. The user terminal is configured to measure the radio state of the specific frequency band based on the special configuration information, and transmits a report related to a measurement result to the base station.

In the first embodiment, the mobile communication system further includes: a remote radio device configured to be operated by the base station. The remote radio device supports mobile communication with the user terminal in the specific frequency band.

In the first embodiment, the base station is further configured to transmit the special configuration information to the user terminal and receive the report from the user terminal, to determine whether or not it is possible to start use of the specific frequency band, before an operation of the remote radio device starts.

In the first embodiment, the user terminal supports carrier aggregation in which a plurality of frequency bands are simultaneously used for mobile communication. In the carrier aggregation, the general frequency band is used as a primary cell, and the specific frequency band is used as a secondary cell.

In the first embodiment, after the operation of the remote radio device starts, the base station is further configured to transmit the special configuration information to the user terminal using the specific frequency band as the secondary cell and receive the report from the user terminal, to determine whether or not it is possible to continuously use the specific frequency band.

In the first embodiment, after the operation of the remote radio device starts, the base station is further configured to suspend transmission from the remote radio device at regular intervals, and cause the user terminal to measure the radio state of the specific frequency band within a period of time in which the transmission from the remote radio device is suspended.

In the first embodiment, the base station is further configured to change an operation method of the remote radio device when communication by a primary user is determined to start based on the report, the primary user specified to use the specific frequency band more preferentially than the mobile communication.

In the first embodiment, the base station is further configured to transmit, to the user terminal, normal configuration information for configuring measurement and report of radio state of the general frequency band, separately from the special configuration information.

In the first embodiment, the special configuration information includes information indicating a measurement frequency.

In the first embodiment, the user terminal that supports the mobile communication in the specific frequency band is configured to transmit capability information related to the specific frequency band to the base station. The base station is further configured to transmit the special configuration information to the user terminal based on the capability information.

A base station according to the first embodiment is configured to perform mobile communication with a user terminal in a general frequency band which a mobile network operator is licensed to use. The base station includes a transmitter configured to transmit, to the user terminal, special configuration information for configuring measurement and report of radio state of a specific frequency band that is shared by a plurality of mobile network operators or a plurality of communication systems.

A user terminal according to the first embodiment is configured to perform mobile communication with a base station in a general frequency band which a mobile network operator is licensed to use. The user terminal includes: a receiver configured to receive, from the base station, special configuration information for configuring measurement and report of a radio state of a specific frequency band that is shared by a plurality of mobile network operators or a plurality of communication systems; and a controller configured to measure the radio state of the specific frequency band based on the special configuration information and transmit a report related to a measurement result to the base station.

A mobile communication system according to a second embodiment includes a specific base station configured to perform mobile communication with a user terminal using a TDD radio frame configuration including a plurality of sub frames in a specific frequency band that is shared by a plurality of mobile network operators or a plurality of communication systems. The plurality of subframes include a non-transmission subframe that is transmitted in neither an uplink nor a downlink. The specific base station is further configured to perform carrier sensing of measuring radio state of the specific frequency band in the non-transmission subframe.

In the second embodiment, the specific base station is further configured to notify the user terminal of the TDD radio frame configuration. The user terminal is configured to suspend transmission of an uplink radio signal in the non-transmission subframe based on the notified TDD radio frame configuration.

In the second embodiment, when there are a plurality of specific base stations used by the mobile network operator, the plurality of specific base stations are synchronized, and positions of the non-transmission subframes are aligned in a time direction.

In the second embodiment, the specific base station is further configured to change an operation method of the specific base station when communication by a primary user is determined to start based on the carrier sensing, the primary user specified to use the specific frequency band more preferentially than the mobile communication.

In the second embodiment, the mobile communication system further includes: a general base station configured to perform mobile communication in a general frequency band which the mobile network operator is licensed to use. When the communication by the primary user is determined to start based on the carrier sensing, the specific base station is further configured to: decide to suspend use of the specific frequency band; and give a notification indicating the suspension of the use of the specific frequency band to the general base station, or perform handover of the user terminal from the specific frequency band to the general base station.

A specific base station according to the second embodiment is configured to perform mobile communication with a user terminal using a TDD radio frame configuration including a plurality of subframes in a specific frequency band that is shared by a plurality of mobile network operators or a plurality of communication systems. The plurality of subframes include a non-transmission subframe that is transmitted in neither an uplink nor a downlink. The specific base station includes a controller configured to perform carrier sensing of measuring radio state of the specific frequency band in the non-transmission subframe.

A user terminal according to the second embodiment is configured to perform mobile communication with a specific base station using a TDD radio frame configuration including a plurality of subframes in a specific frequency band that is shared by a plurality of mobile network operators or a plurality of communication systems. The plurality of subframes include a non-transmission subframe that is transmitted in neither an uplink nor a downlink. The user terminal includes a controller configured to, when a notification of the TDD radio frame configuration is received from the specific base station, suspend transmission of an uplink radio signal in the non-transmission subframe based on the notified TDD radio frame configuration.

### [First embodiment]

Hereinafter, an embodiment in which the present invention is applied to an LTE system serving as a mobile communication system will be described based on a 3GPP standard.

### (LTE system)

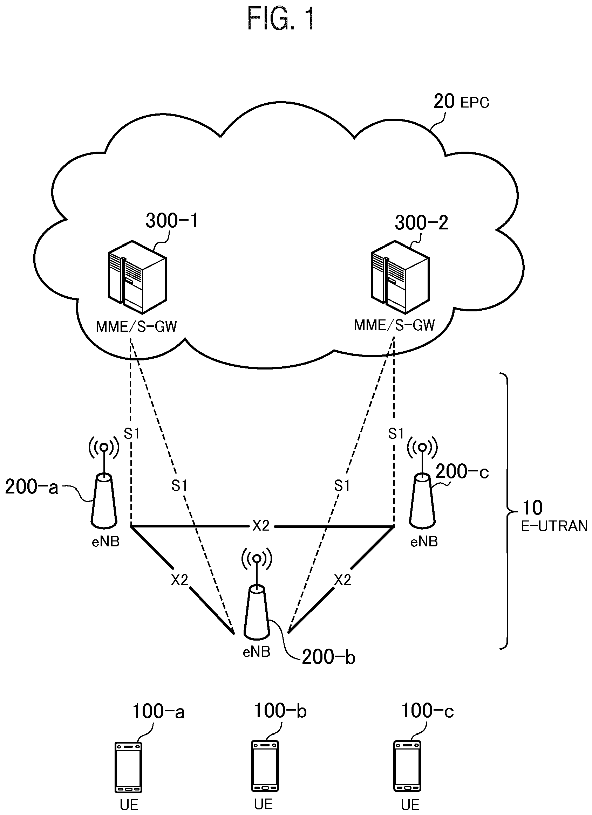

Fig. 1 is a configuration diagram of the LTE system according to the first embodiment.

As illustrated in Fig. 1, the LTE system according to the first embodiment includes UE (User Equipment) 100, E-UTRAN (Evolved-UMTS Terrestrial Radio Access Network) 10, and EPC (Evolved Packet Core) 20.

The UE 100 corresponds to a user terminal. The UE 100 is a mobile communication device, which performs radio communication with a cell (a serving cell). The configuration of the UE 100 will be described later.

The E-UTRAN 10 corresponds to a radio access network. The E-UTRAN 10 includes eNBs (evolved Node-Bs) 200. The eNB 200 corresponds to a base station. The eNBs 200 are connected mutually via an X2 interface. The configuration of the eNB 200 will be described later.

The eNB 200 manages one or a plurality of cells, and performs radio communication with the UE 100 that establishes a connection with a cell of the eNB 200. The eNB 200 has a radio resource management (RRM) function, a routing function of user data, a measurement control function for mobility control and scheduling and the like. The "cell" is used as a term indicating a smallest unit of a radio communication area, and is also used as a term indicating a function of performing radio communication with the UE 100.

The EPC 20 corresponds to a core network. The EPC 20 includes an MME (Mobility Management Entity)/S-GW (Serving-Gateway) 300. The MME performs different types of mobility control and the like for the UE 100. The S-GW performs transfer control of the user data. The MME/S-GW 300 is connected to the eNB 200 via an S1 interface.

The network of LTE system (hereinafter referred as "LTE network") is configured by the E-UTRAN 10 and the EPC 20. The LTE network corresponds to a mobile communication network.

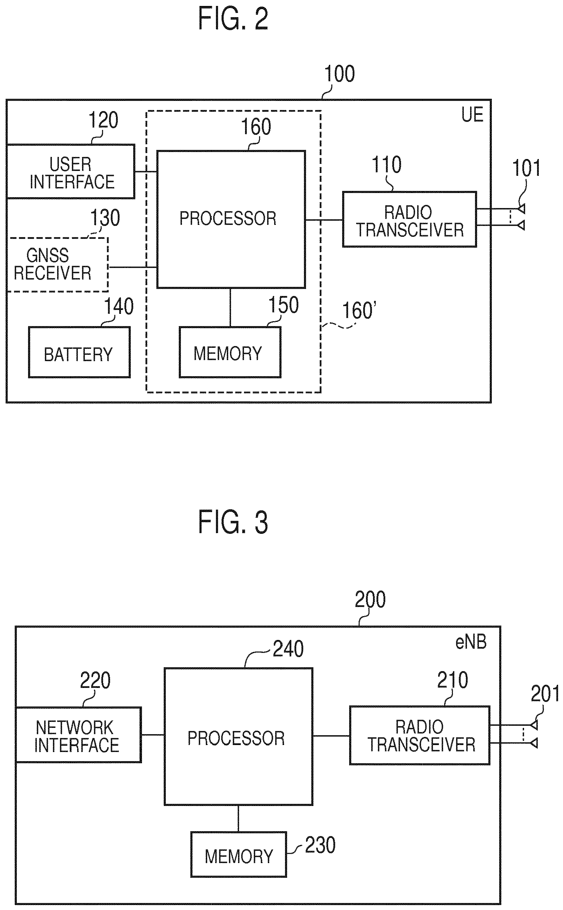

Fig. 2 is a block diagram of the UE 100. As illustrated in Fig. 2, the UE 100 includes antennas 101, a radio transceiver 110, a user interface 120, a global navigation satellite system (GNSS) receiver 130, a battery 140, a memory 150, and a processor 160. The memory 150 and the processor 160 form a controller. The UE 100 may not include the GNSS receiver. The memory 150 may be integrally formed with the processor 160, and this set (that is, a chip set) forming the controller may be called a processor 160'.

The antenna 101 and the radio transceiver 110 are used to transmit and receive a radio signal. The radio transceiver 110 converts a baseband signal (a transmission signal) output from the processor 160 into the radio signal and transmits the radio signal from the antenna 101. Furthermore, the radio transceiver 110 converts a radio signal received by the antenna 101 into a baseband signal (a received signal), and outputs the baseband signal to the processor 160.

The user interface 120 is an interface with a user carrying the UE 100, and includes, for example, a display, a microphone, a speaker, various buttons and the like. The user interface 120 receives an operation from a user and outputs a signal indicating the content of the operation to the processor 160. The GNSS receiver receives GNSS signals to obtain location information indicating the geographical location of the UE 100, and outputs the received signals to the processor 160. The battery 140 accumulates a power to be supplied to each block of the UE 100.

The memory 150 stores a program to be executed by the processor 160 and information to be used for processing by the processor 160. The processor 160 includes a baseband processor that performs modulation and demodulation, encoding and decoding and the like on the baseband signal, and a CPU (Central Processing Unit) that performs various processes by executing the program stored in the memory 150. The processor 160 may further include a codec that performs encoding and decoding on sound and video signals. The processor 160 executes various types of processes and various communication protocols described later.

Fig. 3 is a block diagram of the eNB 200. As illustrated in Fig. 3, the eNB 200 includes antennas 201, a radio transceiver 210, a network interface 220, a memory 230, and a processor 240. The memory 230 and the processor 240 form a controller. Furthermore, the memory 230 may be integrally formed with the processor 240, and this set (that is, a chipset) forming the controller may be called a processor.

The antenna 201 and the radio transceiver 210 are used to transmit and receive a radio signal. The radio transceiver 210 converts a baseband signal (a transmission signal) output from the processor 240 into the radio signal and transmits the radio signal from the antenna 201. Furthermore, the radio transmitter 210 converts a radio signal received by the antenna 201 into a baseband signal (a received signal), and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for processing by the processor 240. The processor 240 includes a baseband processor that performs modulation and demodulation, encoding and decoding and the like on the baseband signal and a CPU that performs various processes by executing the program stored in the memory 230. The processor 240 executes various types of processes and various communication protocols described later.

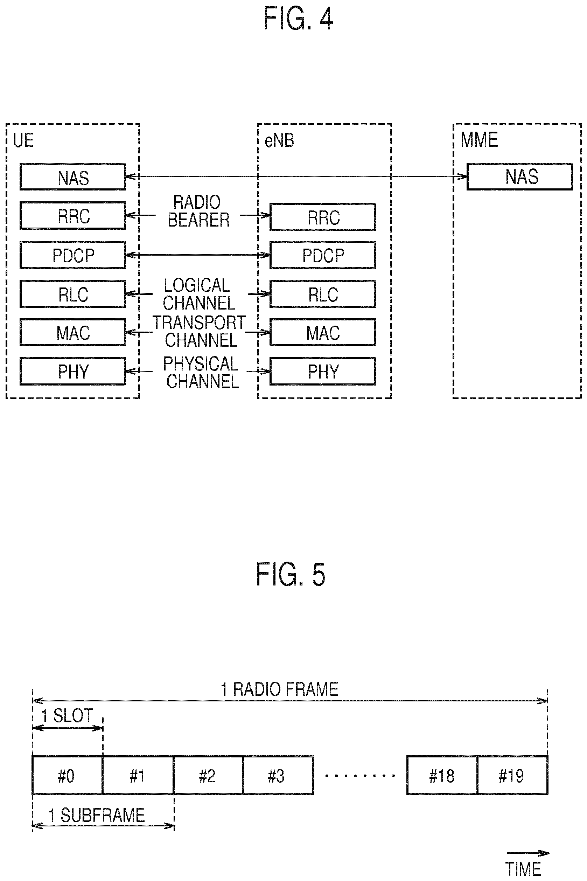

Fig. 4 is a protocol stack diagram of a radio interface in the LTE system. As shown in Fig. 4, the radio interface protocol is classified into a first layer to a third layer of an OSI reference model, such that the first layer is a physical (PHY) layer. The second layer includes a MAC (Medium Access Control) layer, an RLC (Radio Link Control) layer, and a PDCP (Packet Data Convergence Protocol) layer. The third layer includes an RRC (Radio Resource Control) layer.

The physical layer performs encoding and decoding, modulation and demodulation, antenna mapping and demapping, and resource mapping and demapping. Between the physical layer of the UE 100 and the physical layer of the eNB 200, user data and control signals are transmitted via a physical channel.

The MAC layer performs priority control of data, a retransmission process by a hybrid ARQ (HARQ), a random access procedure in RRC connection establishment, and the like. Between the MAC layer of the UE 100 and the MAC layer of the eNB 200, user data and control signals are transmitted via a transport channel. The MAC layer of the eNB 200 includes a scheduler for determining a transport format (a transport block size and a modulation and coding scheme) of an uplink and a downlink, and a resource block to be assigned to the UE 100.

The RLC layer transmits data to an RLC layer of a reception side by using the functions of the MAC layer and the physical layer. Between the RLC layer of the UE 100 and the RLC layer of the eNB 200, user data and control signals are transmitted via a logical channel.

The PDCP layer performs header compression and decompression, and encryption and decryption.

The RRC layer is defined only in a control plane that handles control signals. Between the RRC layer of the UE 100 and the RRC layer of the eNB 200, a control signal (an RRC message) for various types of configurations is transmitted. The RRC layer controls the logical channel, the transport channel, and the physical channel according to the establishment, re-establishment, and release of a radio bearer. When there is an RRC connection between the RRC of the UE 100 and the RRC of the eNB 200, the UE 100 is in an RRC connected state. Otherwise, the UE 100 is in an RRC idle state.

An NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiple Access) is applied to a downlink, and SC-FDMA (Single Carrier Frequency Division Multiple Access) is applied to an uplink, respectively.

As illustrated in Fig. 5, a radio frame is configured by 10 subframes arranged in a time direction. Each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. Each resource block includes a plurality of subcarriers in the frequency direction. One subcarrier and one symbol form one resource element. Of the radio resources (time and frequency resources) assigned to the UE 100, a frequency resource can be identified by a resource block and a time resource can be identified by a subframe (or a slot).

### (Carrier aggregation)

The LTE system according to the first embodiment supports a carrier aggregation (CA). The CA was first introduced in Release 10.

In the CA, in order to implement a broad band while securing backward compatibility with LTE, a carrier (frequency band) in LTE is positioned as a component carrier, and the UE 100 performs communication using a plurality of component carriers (a plurality of serving cells) simultaneously. In the CA, a serving cell performing mobility control for the UE 100 is referred to as a primary cell (Pcell), and an auxiliary serving cell paired with the primary cell is referred to as a secondary cell (Scell).

### (Application scenario according to first embodiment)

An application scenario of the LTE system according to the first embodiment will be described below.

In the first embodiment, the specific frequency band is applied to LTE communication (mobile communication). The specific frequency band is a frequency band that is shared by a plurality of mobile network operators or a plurality of communication systems. In other words, the specific frequency band is a frequency band in which occupancy by a certain mobile network operator is not permitted.

Of the specific frequency bands, the licensed shared band is a frequency band that is allocated or a primary frequency user but can be used by a secondary user according to a geographical condition or a technical condition.

If the specific frequency band is assumed to be the licensed shared band, for example, in the specific frequency band, the user of television broadcasts is the primary user, and the user of the LTE communication is the secondary user. The primary user uses the specific frequency band according to the licensed use (purpose). In other words, the primary user is specified to use the specific frequency band with a higher priority than the secondary user.

As described above, the specific frequency band is a frequency band in which the primary use of the frequency by the LTE network operator (hereinafter, an "operator") is not permitted, nor is the occupancy by a certain operator allowed.

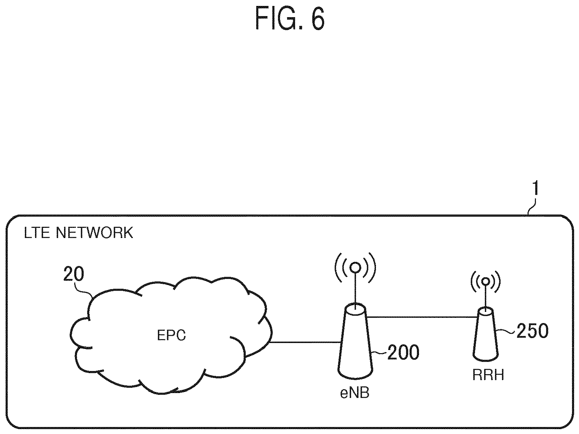

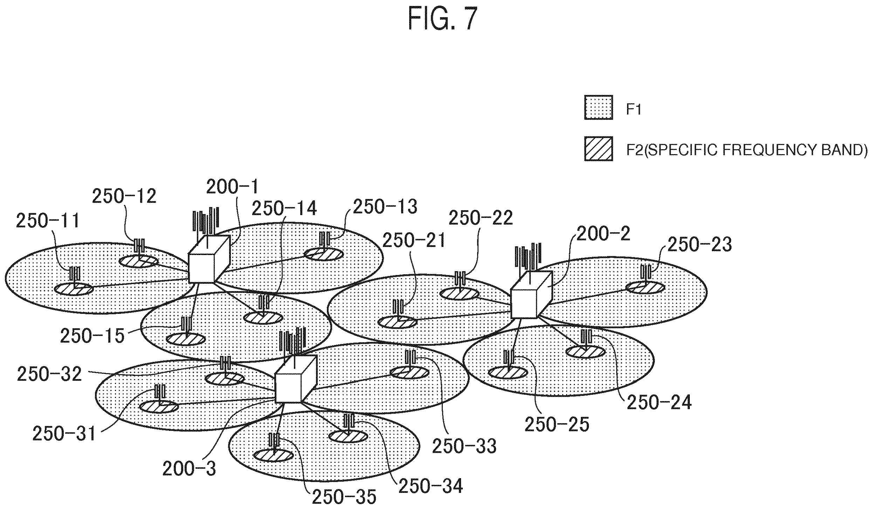

FIGS. 6 and 7 are diagrams illustrating an application scenario of the LTE system according to the first embodiment.

As illustrated in Fig. 6, the LTE system according to the first embodiment includes an LTE network 1 of an operator. The LTE network 1 includes the EPC 20, the eNB 200, and a remote radio head (RRH) 250. The RRH 250 is a remote radio device.

The RRH 250 is operated by the eNB 200. Specifically, the RRH 250 is connected with the eNB 200 through an optical interface such as a common public radio interface (CPRI). The RRH 250 converts a baseband signal (a transmission signal) input from the eNB 200 through the optical interface into a radio signal, and transmits the radio signal. The RRH 250 supports the LTE communication in the specific frequency band. Specifically, the RRH 250 is used for downlink communication using the specific frequency band.

As illustrated in Fig. 7, the eNB 200 performs the LTE communication in a general frequency band F1 which the operator is licensed to use. Fig. 7 illustrates a case in which three eNBs 200 (200-1 to 200-3) are installed. Each of the eNBs 200 manages three cells belonging to the general frequency band F1. The cell belonging to the general frequency band F1 is, for example, a macro cell.

Each of the RRHs 250 manages one cell belonging to a specific frequency band F2. Each of the RRHs 250 is installed within a coverage of the cell belonging to the general frequency band F1. The cell belonging to the specific frequency band F2, for example, is a small cell. Fig. 7 illustrates a case in which RRHs 250-11 to 250-15 are connected to the eNB 200-1, RRHs 250-21 to 250-25 are connected to the eNB 200-2, and RRHs 250-31 to 250-35 are connected to the eNB 200-3.

In the first embodiment, the specific frequency band F2 is used as only an auxiliary downlink carrier. In other words, the specific frequency band F2 is used as only the secondary cell at the time of CA. Thus, in the CA, the general frequency band F1 is used as the primary cell, and the specific frequency band F2 is used as the secondary cell.

### (Operation according to first embodiment)

An operation according to the first embodiment will be described below.

As described above, the LTE system according to the first embodiment includes the eNB 200 that performs the LTE communication with the UE 100 in the general frequency band F1 which the operator is licensed to use. The eNB 200 transmits special configuration information for configuring measurement and report of a radio state of the specific frequency band F2 in which the primary use of the frequency is not permitted to the operator to the UE 100. Here, the radio state refers reception power, a reception quality, and the like.

However, the eNB 200 has to transmit the special configuration information to only the UE 100 that supports the LTE communication in the specific frequency band F2. For this reason, it is desirable that the UE 100 that supports the LTE communication in the specific frequency band F2 transmit capability information related to the specific frequency band F2 to the eNB 200. The eNB 200 transmits the special configuration information to the UE 100 based on the capability information. In the CA based on a combination of the general frequency band F1 and the specific frequency band F2, the UE 100 needs to include a first radio transceiver 110 corresponding to the general frequency band F1 and a second radio transceiver 110 corresponding to the specific frequency band F2. Thus, the UE 100 may notify the eNB 200-1 of the capability information indicating that the UE 100 includes the two radio transceivers.

The special configuration information may include information indicating a frequency band of a measurement target (that is, the specific frequency band F2), information indicating a measurement frequency (a measurement period), and information indicating a report trigger. The information indicating the report trigger includes a threshold value that is compared with a measurement result of the radio state. As will be described later in detail, after the operation of the RRH 250 starts, the eNB 200 causes the UE 100 to measure the radio state of the specific frequency band F2 within a period of time in which transmission from the RRH 250 is suspended. Thus, the special configuration information may include a period of time (timing) in which (at which) transmission from the RRH 250 is suspended, that is, information indicating a period of time (timing) in which (at which) the UE 100 has to measures the radio state of the specific frequency band F2. For example, the information is a subframe number or a bit string (for example, a measurement target subframe is indicated by "1," and a non-measurement target subframe is indicated by "0") associated with each subframe.

The UE 100 measures the radio state of the specific frequency band F2 based on the special configuration information received from the eNB 200, and transmits a report related to the measurement result to the eNB 200. The report may include information indicating a measurement frequency and information indicating the measurement result. As a result, even the eNB 200 that performs the LTE communication with the UE 100 in the general frequency band F1 can detect the radio state of the specific frequency band F2 based on the report transmitted from the UE 100. Thus, since it is possible to appropriately operate the RRH 250 according to the radio state of the specific frequency band F2, it is possible to operate the RRH 250 within the range in which there is no influence of interference on the primary user of the specific frequency band F2.

The eNB 200 transmits normal configuration information for configuring measurement and report of the radio state of the general frequency band F1 to the UE 100, separately from the special configuration information. Thus, the eNB 200 can appropriately perform mobility control (handover control or the like) of the UE 100.

In the first embodiment, in order to determine whether or not it is possible to start the use of the specific frequency band F2 before the operation of the RRH 250 connected with its own eNB 200 starts, the eNB 200 transmits the special configuration information to the UE 100 and receives the report from the UE 100.

As described above, the eNB 200 starts the operation of the RRH 250 when it is determined to be possible to start the use of the specific frequency band F2 based on the radio state of the specific frequency band F2. In other words, when it is determined to be difficult to start the use of the specific frequency band F2, the operation of the RRH 250 does not start.

After the operation of the RRH 250 connected with its own eNB 200 starts, in order to determine whether or not it is possible to continuously use the specific frequency band F2, the eNB 200 transmits the special configuration information to the UE 100 using the specific frequency band F2 as the secondary cell and receives the report from the UE 100. The report is performed non-periodically. Alternatively, the report may be performed periodically.

The eNB 200 changes an operation method of the RRH 250 when communication by the primary user specified to use the specific frequency band F2 more preferentially than the LTE communication is determined to start based on the report. The change of the operation method refers to suspension of the operation of the RRH 250. Alternatively, when the specific frequency band F2 includes a plurality of frequency bands, the frequency band used by the RRH 250 may be changed from a frequency band in which communication by the primary user has started to another frequency band in which communication by the primary user has not started. Thus, it is possible to operate the RRH 250 within the range in which there is no influence of interference on the primary user of the specific frequency band F2.

In the first embodiment, after the operation of the RRH 250 starts, the eNB 200 performs control such that transmission from the RRH 250 is suspended at regular intervals. The eNB 200 causes the UE 100 to measure the radio state of the specific frequency band F2 within a period of time in which transmission from the RRH 250 is suspended.

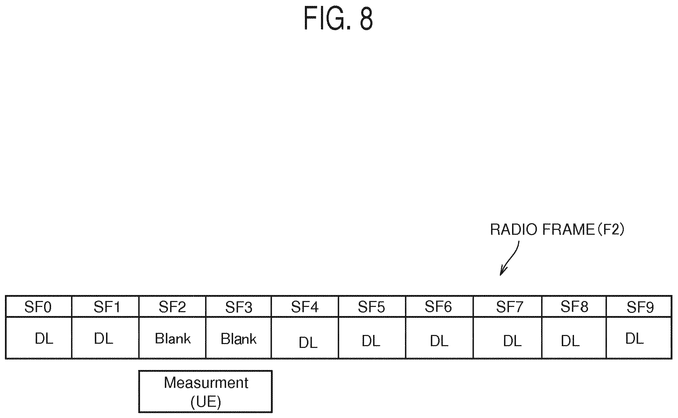

Fig. 8 is a diagram for describing an RRH transmission suspension period according to the first embodiment.

As illustrated in Fig. 8, some subframes included in a radio frame that is dealt with by the RRH 250 are set to as a transmission suspension (Blank) period. Fig. 8 illustrates a case in which subframes "SF2" and "SF3" are set as a transmission suspension period. The eNB 200 causes the UE 100 to measure the radio state of the specific frequency band F2 within a period of time of the subframes "SF2" and "SF3." Subframes other than the subframes "SF2" and "SF3" are set for a downlink (DL).

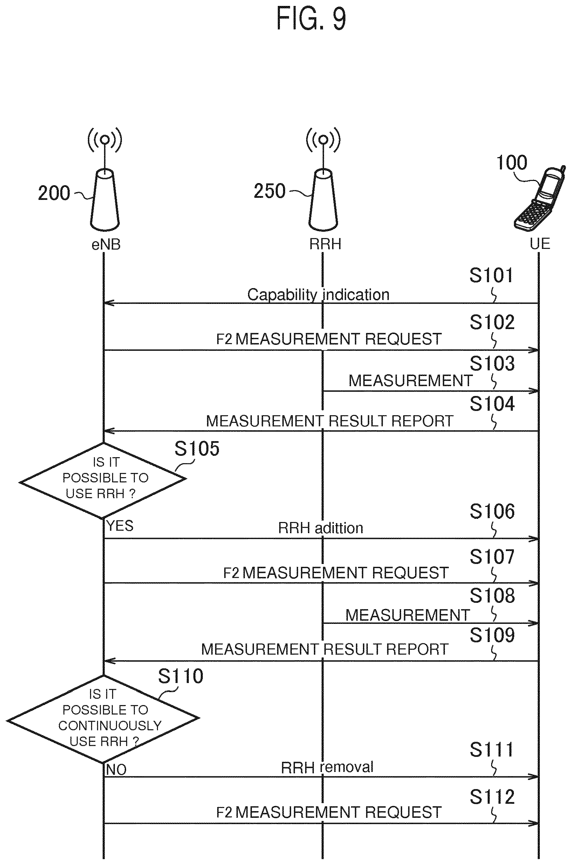

Next, an operation sequence according to the first embodiment will be described. Fig. 9 is a sequence diagram illustrating an operation sequence according to the first embodiment. An initial state of Fig. 9 is a state in which the operation of the RRH 250 starts. The UE 100 is in a state (an RRC-connected state) in which an RRC connection with the eNB 200 has been established, but the carrier aggregation in which the specific frequency band F2 is used as the secondary cell is assumed not to have started yet.

As illustrated in Fig. 9, in step S101, the UE 100 that supports the LTE communication in the specific frequency band F2 transmits the capability information (Capability Indication) related to the specific frequency band F2 to the eNB 200. The eNB 200 determines to cause the UE 100 to measure the specific frequency band F2 based on the capability information received from the UE 100.

In step S102, the eNB 200 transmits the special configuration information (an F2 measurement request) for configuring measurement and report of the radio state of the specific frequency band F2 to the UE 100.

In step S103, the UE 100 that has received the special configuration information measures the radio state of the specific frequency band F2 based on the received special configuration information.

In step S104, the UE 100 transmits the report related to the measurement result of the radio state of the specific frequency band F2 to the eNB 200.

In step S105, the eNB 200 that has received the report determines whether or not it is possible to use the RRH 250 (the specific frequency band F2) based on the received report. Here, the description will proceed under the assumption that it is possible to use the RRH 250 (the specific frequency band F2).

In step S106, the eNB 200 transmits an addition request (RRH addition) for adding the RRH 250 (the specific frequency band F2) as the secondary cell to the UE 100. The UE 100 that has received the addition request adds the RRH 250 (the specific frequency band F2) as the secondary cell.

Thereafter, step S107, the eNB 200 transmits the special configuration information (the F2 measurement request) for configuring the measurement and report of the radio state of the specific frequency band F2 to the UE 100.

In step S108, the UE 100 that has received the special configuration information measures the radio state of the specific frequency band F2 based on the received special configuration information.

In step S109, the UE 100 transmits the report related to the measurement result of the radio state of the specific frequency band F2 to the eNB 200.

In step S110, the eNB 200 that has received the report determines whether or not it is possible to continuously use the RRH 250 (the specific frequency band F2) based on the received report. Here, the description will proceed under the assumption that it is determined to be possible to continuously use the RRH 250 (the specific frequency band F2).

In step S111, the eNB 200 transmits a release request (RRH removal) for precluding the RRH 250 (the specific frequency band F2) as the secondary cell to the UE 100. The UE 100 that has received the release request precludes the RRH 250 (the specific frequency band F2) as the secondary cell.

Thereafter, in order to determine whether or not the use of the RRH 250 (the specific frequency band F2) is resumed, the eNB 200 may transmit the special configuration information (the F2 measurement request) to the UE 100 (step S 112).

As described above, in the first embodiment, it is possible to operate the RRH 250 within the range in which there is no influence of interference on the primary user of the specific frequency band F2, and thus the specific frequency band can be effectively used.

### [Second embodiment]

A second embodiment will be described focusing on different points from the first embodiment.

### (Application scenario according to second embodiment)

An application scenario of the LTE system according to the second embodiment will be described below. The second embodiment is the same as the first embodiment in that the specific frequency band is used for the LTE communication (mobile communication), but an application scenario of the LTE system differ from that of the first embodiment.

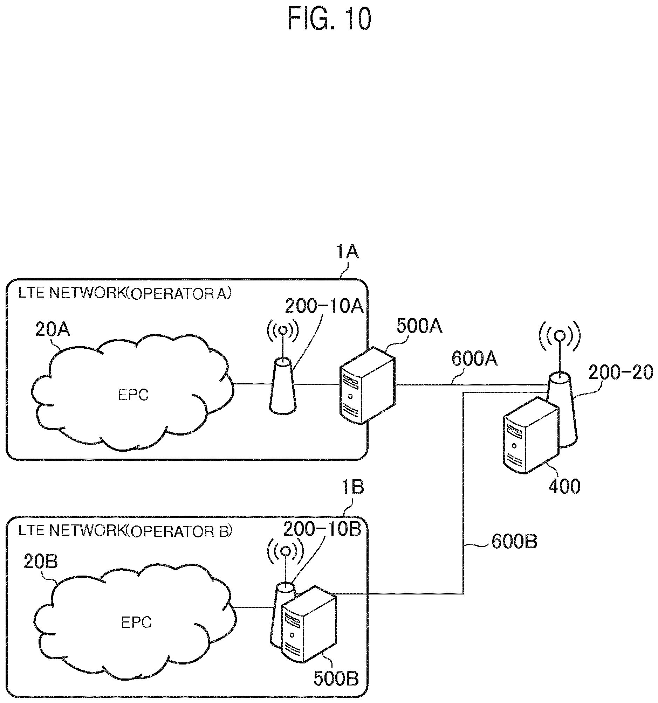

Fig. 10 is a diagram illustrating an application scenario of the LTE system according to the second embodiment.

As illustrated in Fig. 10, the LTE system according to the second embodiment includes an LTE network 1A of an operator A, an LTE network 1B of an operator B, and an eNB 200-20. The LTE network 1A includes an eNB 200-10A and an EPC 20A. The LTE network 1B includes an eNB 200-10B and an EPC 20B. In the second embodiment, the eNB 200-10 (200-10A and 200-10B) corresponds to a general base station.

The eNB 200-20 is the eNB 200 shared by a plurality of operators (the operators A and B), and performs the LTE communication with the UE 100 in the specific frequency band F2. In the second embodiment, the eNB 200-20 corresponds to a specific base station. The eNB 200-20 is operated by, for example, a company or an organization (a so-called third party) independent of the operator A and B or a joint venture of the operator A and B. In the second embodiment, the cell of the eNB 200-20 is adjacent to the cell of the eNB 200-10.

The eNB 200-20 performs backhaul communication with the eNB 200-10A installed in the LTE network 1A of the operator A through an inter-eNB interface 600A. The eNB 200-20 performs backhaul communication with the eNB 200-10B installed in the LTE network 1B of the operator B through an inter-eNB interface 600B. The inter-eNB interface 600 (600A and 600B) is, for example, an X2 interface.

The LTE system according to the second embodiment includes an interface controller 400 installed outside the LTE network 1 (1A and 1B). The interface controller 400 establishes a communication path used as the inter-eNB interface 600 between the interface controller 400 and the LTE network 1. The communication path is, for example, a virtual private network (VPN). In the second embodiment, the interface controller 400 is installed in the eNB 200-20. However, the interface controller 400 may be installed outside the eNB 200-20 and connected with the eNB 200-20.

The LTE network 1 includes a gateway 500 that functions as a connection point between the eNB 200-20 and the LTE network 1. Fig. 10 illustrates a case in which a gateway 500A is installed in the eNB 200-10A in the LTE network 1A, and a gateway 500B is installed in the eNB 200-10B in the LTE network 1B.

In such an application scenario, the eNB 200-20 alone performs the LTE communication (single eNB communication) with one UE 100.

Alternatively, the eNB 200-20 performs the LTE communication (multi-eNB communication) with one UE 100 together with the eNB 200-10 using the inter-eNB interface 600. In this case, one UE 100 is allocated radio resources from both of the eNB 200-10 and the eNB 200-20. Such multi-eNB communication is referred to as a dual connectivity scheme. The dual connectivity scheme will be described later in detail.

As a scheduling method in which a plurality of operators (the operator A and B) shares the eNB 200-20 (the specific frequency band F2), for example, there are two methods.

A first scheduling method is a method in which a plurality of operators use the eNB 200-20 in the time division manner. For example, one subframe is allocated to one operator. In the first scheduling method, the eNB 200-20 notifies the LTE network 1 (the eNB 200-10) of the operator of subframe information and/or frequency resource information that can be used per unit time by the operator.

A second scheduling method is a method in which a plurality of operators simultaneously use the eNB 200-20, and different frequency resources are allocated to the respective operators. In other words, a plurality of operators use the specific frequency band F2 in the frequency division manner. In this case, a MAC scheduler (an integrated MAC scheduler) shared by a plurality of operators is installed in the eNB 200-20. In the second scheduling method, the eNB 200-20 notifies the LTE network 1 (the eNB 200-10) of the operator of the frequency resource information that can be used per unit time by the operator.

### (Dual connectivity scheme)

The LTE system according to the second embodiment supports the dual connectivity scheme. The dual connectivity scheme is expected to be introduced after Release 12. In the dual connectivity scheme, radio resources are allocated to the UE 100 from a plurality of eNBs 200, and the throughput is expected to be improved. The dual connectivity scheme is also referred to as an "inter-eNB carrier aggregation (inter-eNB CA)."

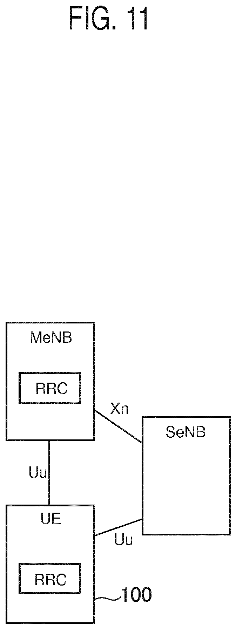

Fig. 11 is a diagram illustrating an overview of the dual connectivity scheme.

As illustrated in Fig. 11, in the dual connectivity scheme, only a master eNB (MeNB) among a plurality of eNBs 200 that establishes a connection with the UE 100 establishes an RRC connection with the UE 100. On the other hand, a secondary eNB (SeNB) among a plurality of eNBs 200 does not establish the RRC connection with the UE 100 and provides additional radio resources to the UE 100. An Xn interface is set between the MeNB and the SeNB. The Xn interface is an X2 interface or a new interface.

In the dual connectivity scheme, the UE 100 can perform the carrier aggregation in which N cells managed by the MeNB and M cells managed by the SeNB are simultaneously used. Here, a group composed of the N cells managed by the MeNB is referred to as a "master cell group (MCG)." A group composed of the M cells managed by the SeNB is referred to as a "secondary cell group (SCG)."

In the second embodiment, the eNB 200-20 is prohibited from being set as the MeNB. On the other hand, the eNB 200-20 is permitted to be se as the SeNB. In other words, the dual connectivity scheme in which the eNB 200-10 is se as the MeNB, and the eNB 200-20 is set as the SeNB is assumed. The inter-eNB interface 600 is used as the Xn interface. The UE 100 in the RRC-connected state simultaneously performs communication with the eNB 200-10 (the MeNB) and communication with the eNB 200-20 (the SeNB) through the dual connectivity scheme.

As described above, the eNB 200-20 that is low in reliability of the LTE communication is not set as the MeNB, and the eNB 200-10 that is high in reliability of the LTE communication is not set as the MeNB, and thus an appropriate dual connectivity scheme can be implemented.

For example, when its own UE 100 supports the dual connectivity scheme, the UE 100 that has established the RRC connection with the eNB 200-10 notifies the eNB 200-10 of the capability information indicating that its own UE 100 supports the dual connectivity scheme. Specifically, in the dual connectivity scheme based on the combination of the eNB 200-10 and the eNB 200-20, the UE 100 needs to include a first radio transceiver 110 corresponding to the frequency band of the LTE network 1 and a second radio transceiver 110 corresponding to the specific frequency band F2. Thus, the UE 100 may notify the eNB 200-10 of the capability information indicating that the UE 100 includes the two radio transceivers. Alternatively, when the UE 100 supports the LTE communication using the specific frequency band F2, the UE 100 may notify the eNB 200-10 of the capability information related to the specific frequency band F2.

The eNB 200-10 that has received the capability information from the UE 100 determines whether or not the eNB 200-10 starts communication of the dual connectivity scheme in which the eNB 200-20 is set as the SeNB with the UE 100 based on the received capability information. When the eNB 200-10 is determined to start communication of the dual connectivity scheme, the eNB 200-10 transmits an SeNB addition request to the eNB 200-20. Upon receiving the SeNB addition request from the eNB 200-10, the eNB 200-20 sets radio resources for the UE 100, and transmits an SeNB addition response to the eNB 200-10. As a result, the communication of the dual connectivity scheme starts.

### (Operation according to second embodiment)

An operation according to the second embodiment will be described below.

In the second embodiment, the eNB 200-20 performs the LTE communication with the UE 100 using a TDD radio frame configuration including a plurality of subframes in the specific frequency band F2 in which the primary use of the frequency is not permitted to the operator. A plurality of subframes includes a non-transmission subframes that is transmitted in neither an uplink nor a downlink. The eNB 200-20 performs carrier sensing of measuring the radio state of the specific frequency band F2 in the non-transmission sub frame. The eNB 200-20 notifies the UE 100 of the TDD radio frame configuration. The UE 100 suspends transmission of an uplink radio signal in the non-transmission subframe based on the TDD radio frame configuration that is notified of.

As a result, the eNB 200-20 that performs the LTE communication with the UE 100 in the specific frequency band F2 can detect the radio state of the specific frequency band F2 while maintaining the RRC connection with the UE 100. Thus, since the specific frequency band F2 can be appropriately used according to the radio state of the specific frequency band F2, the specific frequency band F2 can be used within the range in which there is no influence of interference on the primary user of the specific frequency band F2.

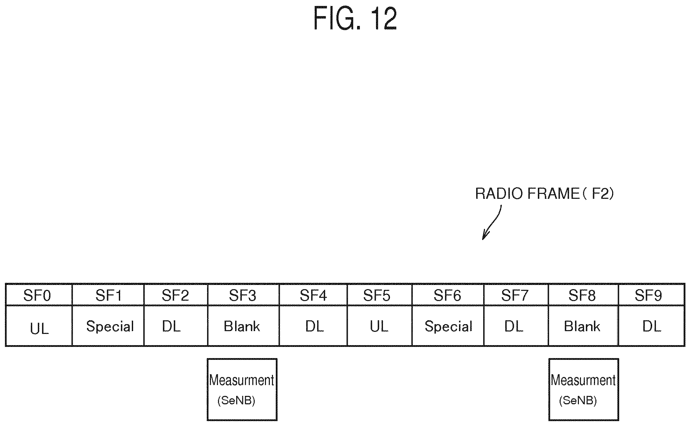

Fig. 12 is a diagram for describing the non-transmission subframe according to the second embodiment.

As illustrated in Fig. 12, some subframes included in a radio frame that is dealt with by the eNB 200-20 are set as uplink and downlink non-transmission (Blank) subframes. Fig. 12 illustrates a case in which subframes "SF3" and "SF8" are set as a non-transmission subframe. The eNB 200-20 performs carrier sensing of measuring the radio state of the specific frequency band F2 in a period of time of the subframes "SF3" and "SF8." Subframes other than the subframes "SF3" and "SF8" are set as an uplink (UL) subframe, a downlink (DL) subframe, or a special subframe. The special subframe is a subframe used for switching of uplink and downlink.

In the second embodiment, the eNB 200-10 and the eNB 200-20 are synchronized with each other, and when there are a plurality of eNBs 200-20, the positions of the non-transmission subframe are aligned in a time direction through a plurality of eNBs 200-20.

In the second embodiment, the eNB 200-20 changes the operation method of its own eNB 200-20 when communication by the primary user specified to use the specific frequency band F2 more preferentially than the LTE communication is determined to start based on the carrier sensing. The change of the operation method refers to suspension of the operation of its own eNB 200-20 (the specific frequency band F2). Alternatively, when the specific frequency band F2 includes a plurality of frequency bands, the frequency band used by its own eNB 200-20 may be changed from a frequency band in which communication by the primary user has started to another frequency band in which communication by the primary user has not started. Thus, it is possible to operate its own eNB 200-20 within the range in which there is no influence of interference on the primary user of the specific frequency band F2.

When communication by the primary user is determined to start based on the carrier sensing, the eNB 200-20 may decide to suspend the use of the specific frequency band F2 and give a notification indicating the suspension of the use of the specific frequency band F2 to the eNB 200-10. For example, when the eNB 200-20 performs the communication of the dual connectivity scheme with the UE 100 together with the eNB 200-10, if the suspension of the use of the specific frequency band F2 is decided, the eNB 200-20 gives a notification indicating the suspension of the use of the specific frequency band F2 to the eNB 200-10. As a result, the eNB 200-10 can perform control such that the dual connectivity is released.

Alternatively, when communication by the primary user is determined to start based on the carrier sensing, the eNB 200-20 may decide to suspend the use of the specific frequency band F2 and perform handover of the UE 100 from its own eNB 200-20 to the eNB 200-10. Thus, it is possible to prevent the LTE communication of the UE 100 from being disconnected.

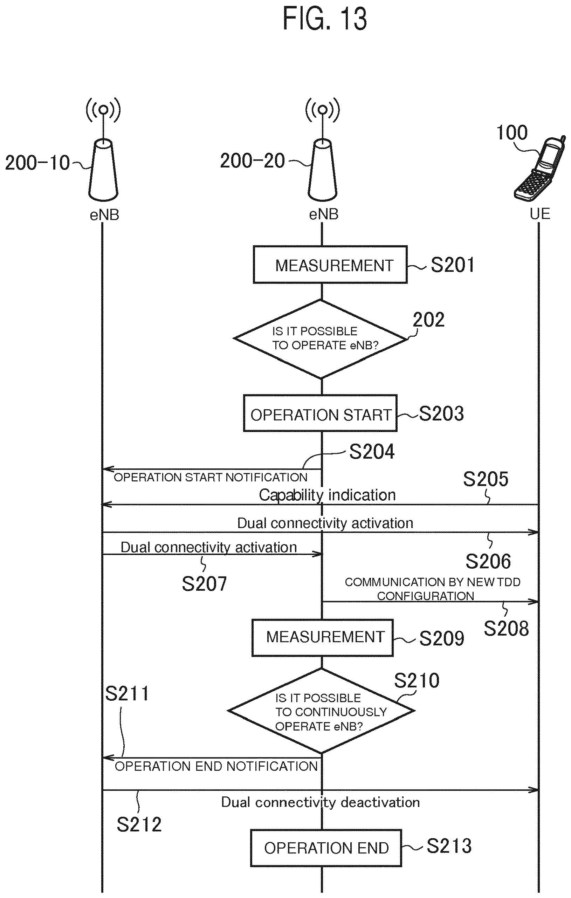

Next, an operation sequence according to the second embodiment will be described. Fig. 13 is a sequence diagram illustrating an operation sequence according to the second embodiment. An initial state of Fig. 13 is a state in which the eNB 200-20 suspends its operation (in the specific frequency band F2). The UE 100 is in a state (an RRC-connected state) in which an RRC connection with the eNB 200-10 has been established, but the dual connectivity in which the eNB 200-20 is set as the SeNB is assumed not to have started yet.

As illustrated in Fig. 13, in step S201, the eNB 200-20 performs the carrier sensing of measuring the radio state of the specific frequency band F2.

In step S202, the eNB 200-20 determines whether or not it is possible to start the operation of its own eNB 200-20 (the specific frequency band F2) based on the carrier sensing. Here, the description will proceed under the assumption that it is possible to start the operation of its own eNB 200-20 (the specific frequency band F2).

In step S203, the eNB 200-20 starts the operation of its own eNB 200-20 (the specific frequency band F2).

In step S204, the eNB 200-20 transmits a notification indicating that the operation of its own eNB 200-20 (the specific frequency band F2) starts to the eNB 200-10.

In step S205, the UE 100 transmits the capability information (Capability Indication) related to the specific frequency band F2 to the eNB 200-10. The eNB 200-10 determines to cause the UE 100 to start the communication of the dual connectivity scheme based on the capability information received from the UE 100.

In step S206, the eNB 200-10 transmits configuration information (Dual connectivity activation) for configuring the eNB 200-20 as the SeNB to the UE 100. In step S207, the eNB 200-10 transmits addition information (Dual connectivity activation) for adding the eNB 200-20 as the SeNB to the eNB 200-20. Steps S206 and S207 may be performed in an opposite order.

In step S208, the eNB 200-20 notifies the UE 100 of the TDD radio frame configuration (New TDD configuration) illustrated in Fig. 12, and performs the LTE communication of the TDD scheme with the UE 100. The UE 100 suspends transmission of an uplink radio signal in the non-transmission subframe based on the TDD radio frame configuration that is notified of.

In step S209, the eNB 200-20 performs the carrier sensing of measuring the radio state of the specific frequency band F2 in the non-transmission subframe.

In step S210, the eNB 200-20 determines whether or not it is possible to continuously operate its own eNB 200-20 (the specific frequency band F2) based on the carrier sensing. Here, the description will proceed under the assumption that it is possible to continuously operate its own eNB 200-20 (the specific frequency band F2).

In step S211, the eNB 200-20 transmits a notification indicating the operation of its own eNB 200-20 (the specific frequency band F2) ends to the eNB 200-10.

In step S212, the eNB 200-10 transmits a release request (Dual connectivity deactivation) for precluding the eNB 200-20 from the SeNB to the UE 100. The UE 100 releases the configuring of the SeNB.

In step S213, the eNB 200-20 ends the operation of its own eNB 200-20 (the specific frequency band F2).

As described above, in the second embodiment, the eNB 200-20 can be operated within the range in which there is no influence of interference on the primary user of the specific frequency band F2, and thus the specific frequency band can be effectively used.

### [Other embodiments]

The first embodiment has been described in connection with the case in which in the application scenario in which the RRH 250 is installed, the main entity that measures the specific frequency band is the UE 100 (under the control of the eNB 200), the specific frequency band is dedicated for a downlink, and the carrier aggregation (CA) is applied. The second embodiment has been described in connection with the case in which in the application scenario in which the eNB 200-20 is installed, the main entity that measures the specific frequency band is the specific frequency band, a new TDD radio frame configuration is applied to the specific frequency band, and the dual connectivity is applied. However, none of the first and second embodiments is limited to such a combination. The first and second embodiments may be combined and carried out. For example, in the application scenario in which the eNB 200-20 is installed as in the second embodiment, the technique of measuring the specific frequency band according to the first embodiment may be applied, and the UE 100 (under the control of the eNB 200-10) may be the main entity that measures the specific frequency band. Further, in the application scenario in which the RRH 250 is installed as in the first embodiment, the new TDD radio frame configuration according to the second embodiment may be applied to the specific frequency band.

The second embodiment has been described in connection with the case in which in the eNB 200-20 is shared by a plurality of operators, but the eNB 200-20 may be used by a single operator.

In the above embodiments, the specific frequency band is mainly assumed to be the licensed shared band. However, the specific frequency band may be an Industry-Science-Medical (ISM) band such as a 2.4 GHz band, that is, the unlicensed band.

In the above embodiments, the LTE system has been described as an example of the mobile communication system, but the present invention is not limited to the LTE system and may be applied to a system other than the LTE system.

This application claims the benefit of Japanese Priority Patent Application No. 2014-032297 filed on February 21, 2014, the entire contents of which are incorporated herein by reference.

### INDUSTRIAL APPLICABILITY

The present invention is useful in a radio communication field.

## Claims

1. A mobile communication system, comprising:
a base station configured to perform a mobile communication with a user terminal in a general frequency band which a mobile network operator is licensed to use,
wherein the base station is configured to transmit, to the user terminal, special configuration information for configuring measurement and report of radio state of a specific frequency band that is shared by a plurality of mobile network operators or a plurality of communication systems, and
the user terminal is configured to measure the radio state of the specific frequency band based on the special configuration information, and transmit a report related to a measurement result to the base station.

2. The mobile communication system according to claim 1, further comprising:
a remote radio device configured to be operated by the base station,
wherein the remote radio device supports mobile communication with the user terminal in the specific frequency band.

3. The mobile communication system according to claim 2, wherein
the base station is further configured to transmit the special configuration information to the user terminal and receive the report from the user terminal, to determine whether or not it is possible to start use of the specific frequency band, before an operation of the remote radio device starts.

4. The mobile communication system according to claim 1, wherein
the user terminal supports carrier aggregation in which a plurality of frequency bands are simultaneously used for mobile communication, and
in the carrier aggregation, the general frequency band is used as a primary cell, and the specific frequency band is used as a secondary cell.

5. The mobile communication system according to claim 4, wherein
after the operation of the remote radio device starts, the base station is further configured to transmit the special configuration information to the user terminal using the specific frequency band as the secondary cell and receive the report from the user terminal, to determine whether or not it is possible to continuously use the specific frequency band.

6. The mobile communication system according to claim 5, wherein
after the operation of the remote radio device starts, the base station is further configured to suspend transmission from the remote radio device at regular intervals, and cause the user terminal to measure the radio state of the specific frequency band within a period of time in which the transmission from the remote radio device is suspended.

7. The mobile communication system according to claim 5, wherein
the base station is further configured to change an operation method of the remote radio device when communication by a primary user is determined to start based on the report, the primary user specified to use the specific frequency band more preferentially than the mobile communication.

8. The mobile communication system according to claim 1, wherein
the base station is further configured to transmit, to the user terminal, normal configuration information for configuring measurement and report of radio state of the general frequency band, separately from the special configuration information.

9. The mobile communication system according to claim 1, wherein
the special configuration information includes information indicating a measurement frequency.

10. The mobile communication system according to claim 1, wherein
the user terminal that supports the mobile communication in the specific frequency band is configured to transmit capability information related to the specific frequency band to the base station, and
the base station is further configured to transmit the special configuration information to the user terminal based on the capability information.

11. A base station configured to perform mobile communication with a user terminal in a general frequency band which a mobile network operator is licensed to use, comprising:
a transmitter configured to transmit, to the user terminal, special configuration information for configuring measurement and report of radio state of a specific frequency band that is shared by a plurality of mobile network operators or a plurality of communication systems.

12. A user terminal configured to perform mobile communication with a base station in a general frequency band which a mobile network operator is licensed to use, comprising:
a receiver configured to receive, from the base station, special configuration information for configuring measurement and report of a radio state of a specific frequency band that is shared by a plurality of mobile network operators or a plurality of communication systems; and
a controller configured to measure the radio state of the specific frequency band based on the special configuration information and transmit a report related to a measurement result to the base station.

13. A mobile communication system, comprising:
a specific base station configured to perform mobile communication with a user terminal using a TDD radio frame configuration including a plurality of subframes in a specific frequency band that is shared by a plurality of mobile network operators or a plurality of communication systems,
wherein the plurality of subframes include a non-transmission sub frame that is transmitted in neither an uplink nor a downlink, and
the specific base station is further configured to perform carrier sensing of measuring radio state of the specific frequency band in the non-transmission subframe.

14. The mobile communication system according to claim 13, wherein
the specific base station is further configured to notify the user terminal of the TDD radio frame configuration, and
the user terminal is configured to suspend transmission of an uplink radio signal in the non-transmission subframe based on the notified TDD radio frame configuration.

15. The mobile communication system according to claim 13, wherein
when there are a plurality of specific base stations used by the mobile network operator, the plurality of specific base stations are synchronized, and positions of the non-transmission subframes are aligned in a time direction.

16. The mobile communication system according to claim 13, wherein
the specific base station is further configured to change an operation method of the specific base station when communication by a primary user is determined to start based on the carrier sensing, the primary user specified to use the specific frequency band more preferentially than the mobile communication.

17. The mobile communication system according to claim 16, further comprising:
a general base station configured to perform mobile communication in a general frequency band which the mobile network operator is licensed to use, wherein
when the communication by the primary user is determined to start based on the carrier sensing, the specific base station is further configured to:
decide to suspend use of the specific frequency band; and
give a notification indicating the suspension of the use of the specific frequency band to the general base station, or perform handover of the user terminal from the specific frequency band to the general base station.

18. A specific base station configured to perform mobile communication with a user terminal using a TDD radio frame configuration including a plurality of subframes in a specific frequency band that is shared by a plurality of mobile network operators or a plurality of communication systems, the plurality of subframes including a non-transmission subframe that is transmitted in neither an uplink nor a downlink, the specific base station comprising:
a controller configured to perform carrier sensing of measuring radio state of the specific frequency band in the non-transmission subframe.

19. A user terminal configured to perform mobile communication with a specific base station using a TDD radio frame configuration including a plurality of subframes in a specific frequency band that is shared by a plurality of mobile network operators or a plurality of communication systems, the plurality of subframes including a non-transmission subframe that is transmitted in neither an uplink nor a downlink, the user terminal comprising:
a controller configured to, when a notification of the TDD radio frame configuration is received from the specific base station, suspend transmission of an uplink radio signal in the non-transmission subframe based on the notified TDD radio frame configuration.
